# EUROPEAN PATENT SPECIFICATION

(11) **EP 1 654 458 B1**
(45) Date of publication and mention of the grant of the patent: **13.06.2007**
(21) Application number: 04775028.6
(22) Date of filing: 12.08.2004
(51) Int. Cl.: F03B 13/26, E02B 9/08, F03B 13/18

(54) **ENERGY GENERATOR POWERED BY TIDAL CURRENTS**
DURCH GEZEITENSTRÖMUNGEN ANGETRIEBENER ENERGIEERZEUGER
GENERATRICE D'ENERGIE ACTIONNEE PAR LES COURANTS DE MAREE

(30) Priority: 14.08.2003 NO 20033625
(43) Date of publication of application: 10.05.2006
(73) Proprietor: Tidetec AS, 1167 Oslo (NO)
(72) Inventor: KOLLANDSRUD, Per, N-1167 Oslo (NO)
(74) Representative: Sundien, Thomas
(86) International application number: PCT/NO2004/000244
(87) International publication number: WO 2005/017349

(56) References cited:
- WO-A1-00/50768
- GB-A- 2 298 004
- GB-A- 2 311 566
- US-A- 5 440 176

## Description

The invention relates to plants for the generation of electrical power from open, flowing masses of water, primarily tidal currents chiefly in narrow and shallow sounds. More specifically, the invention relates to an energy generator apparatus powered by tidal currents, comprising a turbine mounted in a turbine housing for rotation therein about a substantially vertical axis.

The invention is of particular interest where there is also a need for a road and/or bridge connection.

Tidal currents in the sea are due to the gravitational forces from the moon and the sun. Vast masses of water are pushed back and forth and form the ebb and flow. These waves move westwards as a result of the rotation of the Earth and have a wave height in the major oceans that is less than one metre. When these tidal waves enter constricted areas, greater tidal ranges occur. One example of this is the English Channel with up to 15 metres difference between high tide and low tide. In other places, for example, in the Oslo Fjord, there may be a small difference between high tide and low tide. This is due to geographical conditions.

The rhythmic rise and fall of the surface of the sea governed by the gravitational forces of the celestial bodies can be calculated a long time in advance. Such calculations are set down in tide tables for the most used seas. It is this predictable component of the tidal currents, the astronomical tidal range, that can be utilised in power generation. In addition, there is a meteorological component that is due to wind and air pressure. One example here is the Oslo Fjord where prolonged low pressure and a southerly wind can force extra water masses into the fjord system. This component is not utilisable in power generation. However, during the planning stage it must be taken into account that both the meteorological component and the astronomical component may occur simultaneously.

A study in the EU concludes that there is a potential for tidal energy of more than 100 TWh, chiefly around the shores of Great Britain and France. Suitable locations in Norway for tidal power stations are found along the coast from the northern part of West Norway to the border with Russia. Unlike wind and waves that are controlled by unstable geophysical processes, the astronomical component of tidal currents is a stable and predictable source of energy.

The energy in tidal currents can be extracted by using the difference in level between high tide and low tide (potential energy), by harnessing the kinetic energy in the water flow or by a combination of these forms of energy.

The energy exploitation of tidal currents can be traced back to special mill structures in France and Spain before the eleventh century. There are few tidal power stations in use today. The most well-known is a large plant in La Rance in France with 24 turbines and a smaller facility in Kislogursk in Russia. A common feature of these plants is the use of fixedly mounted turbines of the Kaplan type with adjustable guide vanes and adjustable turbine blades. When the tide turns, the water flow will first hit the guide vanes after passing through the turbine. This results in a reduction in the efficiency of the turbine.

Norwegian Patent Application 2001 0737 teaches a system for pile-type anchoring to the bottom with a wholly submerged turbine and generator unit. The document describes systems for connection to and disconnection from the pile foundation.

US 5,440,176 teaches plants for power generation comprising submerged frame structures having turbine and generator units capable of being raised or lowered and rotated individually.

Furthermore, GB 2 298 004 teaches a tidal power station where the turbine is installed in a flow channel in a dam or isthmus with a road on the top. US 4,468,153 teaches a tidal power station having a turbine that can be turned around so that the movement of the tide in both directions can be utilised. WO 00/50768 and GB 2 311 566 both teach water turbines constructed for utilising flowing water, especially tidal currents. The turbine is mounted on a pile or column that can be turned around.

There is therefore a need for an apparatus for generating electric power from tidal currents in a cost-effective manner, where the machinery can quickly and efficiently be pulled up from the sea and taken to, for example, a service facility, without any need for divers and costly crane vessels. It is also desirable to provide a simple turbine structure of high efficiency independent of the direction of the water current. It is also desirable to provide a power generator apparatus that is arranged so that the actual generator and other electric installations are placed above the highest recorded water level, and are thus protected and readily accessible for operation and maintenance.

The invention solves these problems by providing an apparatus comprising a turbine mounted in a turbine housing for rotation therein about a substantially vertical axis, characterised in that the turbine is attached to a supporting column which at a lower portion is pivotally supported in the lower portion of the turbine housing and which at an upper portion in the horizontal plane is supported by a plurality of rotating elements in engagement with a portion of the inner wall of the turbine housing, whereby said turbine can be selectively rotated in said turbine housing so that the turbine at all times is optimally positioned relative to the prevailing water current direction.

Preferred embodiments of the apparatus according to the invention are disclosed in attached dependent claims 2 to 9.

Another object of the invention is to obtain a solid and vibration-damping connection between the steel structure of the turbine and the interior rough-cast concrete surface of the turbine housing. The embodiment makes moderate demands on the concrete surface and the interior profile of the turbine housing, any possible irregularities being absorbed by seals.

An embodiment of the invention will now be described in more detail with reference to the attached drawings where like parts have been given like reference numerals.

Fig. 1 is a sectional view of three of the apparatus according to the invention, mounted in series to form a roadway and where one of the apparatus is shown in section.

Fig. 2 is a simplified diagram of the arrangement shown in Fig. 1 seen from above.

Fig. 3 is a section in the plane C-C in Fig. 1.

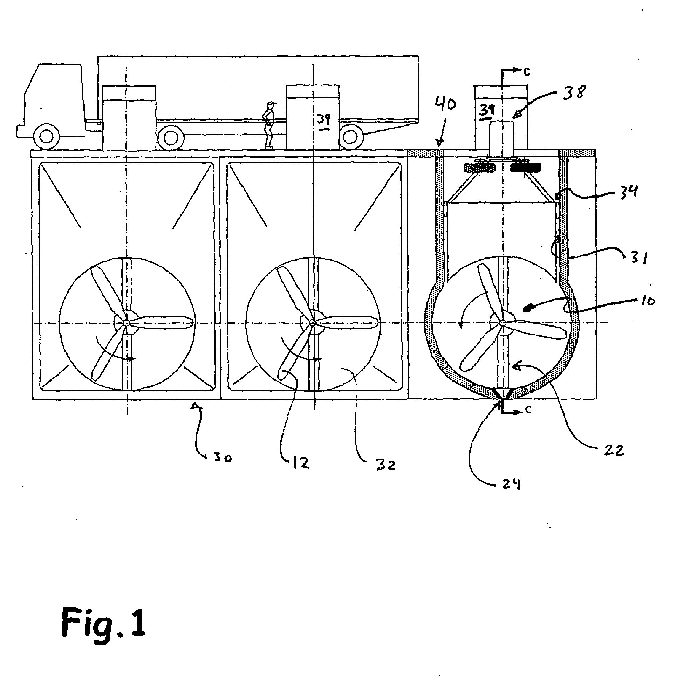

As can be seen from Fig. 1, the apparatus according to the invention comprises a turbine 10 with turbine blades 12 mounted on a supporting column 22 in a turbine housing 30. The turbine housing may be made of concrete and be a prefabricated element that is floated into place and installed at the desired point on the seabed so that the uppermost part (the roadway 40) is above the highest recorded water level. The turbine housing 30 as shown in Fig. 1 is closed apart from the flow opening 32 though which the tidal current flows. In the turbine housing on the far right in Fig. 1, the turbine housing cover has been removed to show the internal structure of the housing and the mounting of the turbine. It can be seen from the figures that the turbine is connected to a generator 38 (suitably located in a generator housing 39 on a level with said roadway 40). The advantage of this is that the generator 38 is safely located above the highest recorded water level and is readily accessible for operation and maintenance.

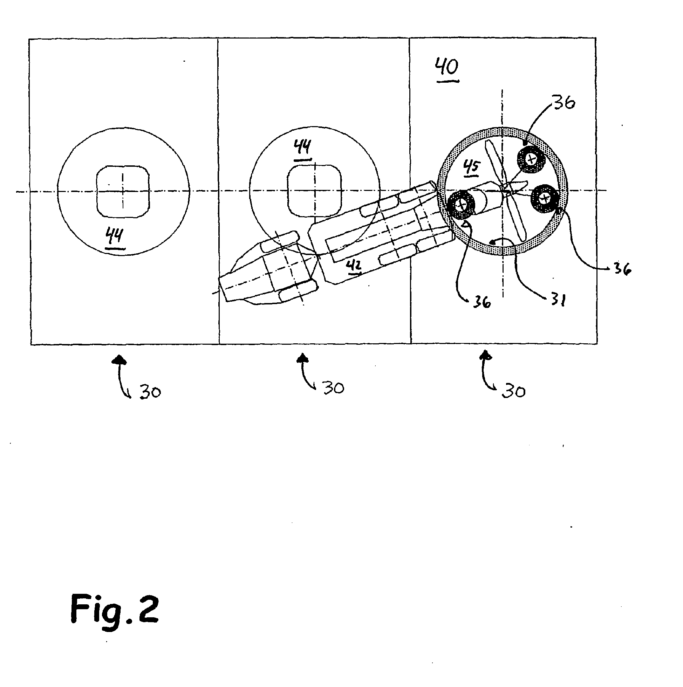

Fig. 2 shows the arrangement seen from above where the turbine housings 30 have an access opening 45 which normally will be covered by a cover 44. Upon installation, extensive maintenance and retrieval of the complete generator-turbine unit, an installation means 42, such as a vehicle, may easily be positioned above the access opening 45 and retrieve or lower the complete generator-turbine unit.

The apparatus according to the invention thus comprises, as mentioned, a turbine 10 that is mounted on a supporting column 22. At its upper end, the supporting column is connected to a generator 38 and at its lower end it is supported at a point 24 on the bottom of the turbine housing. The lower support point may advantageously be a water-lubricated swivel connection, for example, of rubber, thereby enabling the whole turbine-supporting column arrangement to rotate about the vertical axis.

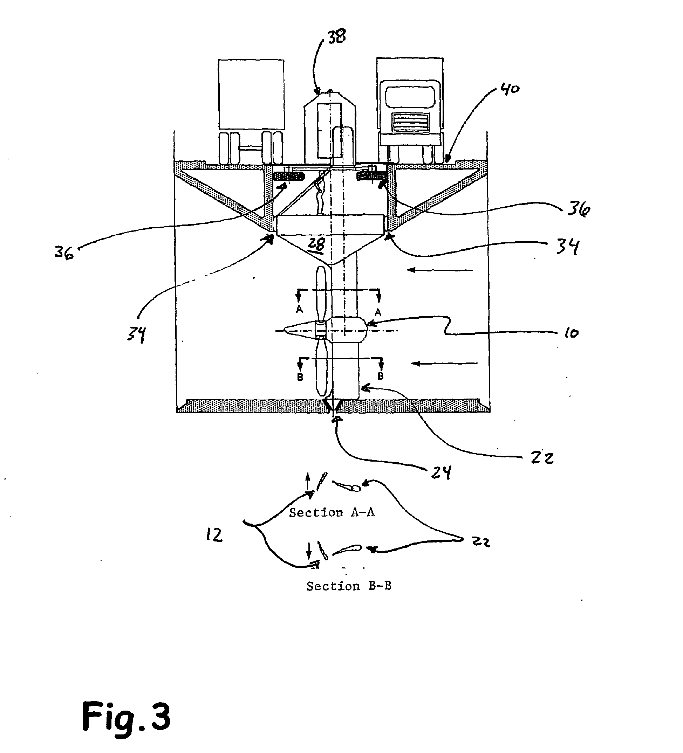

Figures 1 and 3 show a substantially circular element 28 mounted on the supporting column above the generator. This element is tapered in the direction of the turbine so as to reduce the flow opening 32 of the turbine housing to a size that is almost equal to the diameter defined by the turbine blades 12. Of course, it is well known to use this so-called venturi principle both to increase the flow rate and to extract as much energy as possible from the water masses.

The area in the turbine housing above this element 28 should preferably be dry, that means to say water should not flow into this space. To provide a horizontal support of said supporting column 22, a plurality of rotating elements 36 are provided at the upper portion of the supporting column, which, when the plant is in operation, are in engagement with a portion of the inner wall of the turbine housing. These rotating elements (the figures show three of them) are preferably hydraulically or electrically operated rubber wheels. In addition to giving horizontal support, these rotating elements or wheels 36 will thus also be able to effect the actual rotation of the turbine when this is desirable in relation to the direction of the water flow. When it is desired to turn the turbine with the changing tide, the wheels 36 are simply actuated and the friction between the wheels and the interior wall of the turbine housing cause the rotation of the supporting column 22. The wheels 36 are preferably filled with one or more fluids such as air and/or another gas and/or a liquid.

To prevent leakage from the flow area into the portion above the circular element 28 a seal can be provided around the largest periphery of the circular element 28. This seal 34 may, for instance, be a rubber tube which can selectively be expanded and contracted using either hydraulics or pneumatics and, in addition to its aforementioned function, help to maintain the supporting column in the desired position (in other words, a type of locking mechanism) and prevent vibrations (and thus noise) from the turbine when in operation from travelling into the turbine housing. The seal 34 will also in an effective manner absorb irregularities in the interior wall of the turbine housing. The rigidity of the seal can advantageously be adjusted as a function of actual loads and vibrations. Furthermore, the seal may advantageously be deflated when the turbine rotates and inflated when the turbine is turned into the new desired position. Such inflation and deflation may advantageously be automated and synchronised with the rotation of the turbine in step with the changes of direction of the tidal flow.

As known, it is important that as great a proportion as possible of the energy from the water masses should be transmitted to the turbine blades. That means to say that it is desirable that the water is as free as possible for rotation after having flowed passed the turbine blades. This is achieved in a known manner by guide vanes imparting a certain rotation to the water masses that is in the opposite direction to the rotational direction of the turbines before the water masses hit the turbine blades. In the apparatus according to the invention, this is solved in that the supporting column 22 itself is made in the form of guide vanes. Fig. 3 shows this; see the section A-A and the section B-B from which it is clear that the supporting column has a cross-sectional profile that provides rotation that is in the opposite direction to the direction of rotation the water flow is given on the passing of the turbine blades 12.

As can be seen from Figures 1 and 2, a desired number of the apparatus according to the invention can be arranged in series so as to form a foundation for a roadway 40. The turbine housing 30 may, as mentioned, be a prefabricated element that can be floated to the location. The invention thus offers an apparatus for procuring cost-efficient electric power from tidal currents. The machinery can quickly and efficiently be pulled up from the sea and taken to a service facility without any need for divers and costly crane vessels. During the hoisting and installation of the unit, the rotating elements (the rubber wheels) 36 may be deflated to facilitate the hoisting or the lowering of the unit.

When the unit is in place in the turbine housing, the wheels are inflated until the desired contact with the interior wall 31 is obtained.

As mentioned, the control of both the rotary elements and the seals is done automatically, preferably by computer control, when the tidal flow turns. The internal pressure medium in the seal (e.g., a flat tube) 34 is drawn off so that it adopts its inoperative position which is generally clear of the concrete wall. Then the rotary motors are started and the rotating elements 36 are moved until the turbine has been rotated 180°. Pressure medium is subsequently pumped into the seal, which then in its inflated state provides a fixed but resilient connection between the turbine and the turbine housing.

The invention offers a simple turbine structure of high efficiency in both direction of the water flow. Vulnerable equipment such as the generator and other electric equipment is placed in a protected manner above the highest normal water level. Furthermore, a cost-efficient and noise-damped connection between the turbine-generator unit and the turbine housing is obtained.

## Claims

1. An energy generator apparatus powered by tidal currents, comprising a turbine (10) mounted in a turbine housing (30) for rotation therein about a substantially vertical axis, **characterised in that** the turbine (10) is connected to a supporting column (22) which at a lower portion is pivotally supported (24) in the lower portion of the turbine housing, and which in an upper portion in the horizontal plane is supported by a plurality of rotating elements (36) in engagement with a portion of the inner wall of the turbine housing, whereby said turbine can be selectively rotated in said turbine housing so that the turbine at all times is optimally positioned relative to the prevailing direction of water flow.

2. An apparatus according to claim 1, **characterised in that** said rotating elements (36) are actuatable and thus cause said selective rotation of the turbine.

3. An apparatus according to claim 2, **characterised in that** the rotating elements are hydraulically or electrically operated wheels.

4. An apparatus according to claim 1, **characterised by** an element (28) on the supporting column between the turbine (10) and the rotating elements (36), which part is tapered in the direction of said turbine, so as to reduce the flow opening (32) of the turbine housing to a size that is almost equal to the diameter defined by the turbine blades (12).

5. An apparatus according to claim 1, **characterised by** a seal (34) on a substantially circular element (28) in the horizontal plane on the supporting column having a larger circumference than the supporting column, wherein said element is disposed between the turbine (10) and the rotary elements (36), said seal being disposed along the largest periphery of the circular element (28).

6. An apparatus according to claims 1 and 5, **characterised in that** said seal (34) may selectively be brought into contact with a surrounding part of the interior wall (31) of the turbine housing, so as to maintain said supporting column in the desired position, to prevent water from entering into the space above said circular element (28) and to prevent vibrations from the turbine, when in operation, from travelling to the turbine housing (30).

7. An apparatus according to claim 1, **characterised in that** at least one portion of said supporting column (22) is made in the form of guide vanes, in order to cause the water flow during operation to be given a rotational direction that is opposite to the rotational direction that the water flow is given on the passing of the turbine blades (12).

8. An apparatus according to claim 1, **characterised in that** an energy transfer between the turbine (10) and a generator (38) is provided through an internal passage in said supporting column (22), and that said generator is located at a level above said circular element (28), preferably above said turbine housing (30).

9. An apparatus according to claim 1, **characterised in that** said turbine housing (30) is a prefabricated element that can be floated to the location where power is to be generated and installed on the seabed so that an upper portion of the turbine housing will be at a level above recorded normal water level.

## Patentansprüche

1. Energieerzeuger, der von Gezeitenströmungen angetrieben wird und eine Turbine (10) umfasst, die so in einem Turbinengehäuse (30) gelagert ist, dass sie sich darin um eine im Wesentlichen vertikale Achse dreht, **dadurch gekennzeichnet, dass** die Turbine (10) mit einer Tragsäule (22) verbunden ist, die an einem unteren Teil drehbar in dem unteren Teil des Turbinengehäuses gestützt wird (24), und die in einem oberen Teil in der horizontalen Ebene von einer Vielzahl von Drehelementen (36) gestützt wird, die in einem Teil der Innenwand des Turbinengehäuses eingerastet sind, wobei die Turbine selektiv in dem Turbinengehäuse gedreht werden kann, so dass die Turbine in Bezug auf die vorwiegende Richtung des Wasserstroms zu jedem Zeitpunkt optimal positioniert ist.

2. Vorrichtung nach Anspruch 1, **dadurch gekennzeichnet, dass** die Drehelemente (36) in Bewegung gesetzt werden können und **dadurch** die selektive Drehung der Turbine bewirken.

3. Vorrichtung nach Anspruch 2, **dadurch gekennzeichnet, dass** die Drehelemente hydraulisch oder elektrisch betriebene Räder sind.

4. Vorrichtung nach Anspruch 1, **gekennzeichnet durch** ein Element (28) auf der Tragsäule zwischen der Turbine (10) und den Drehelementen (36), deren Teil in Richtung der Turbine spitz zuläuft, um die Durchflussöffnung (32) des Turbinengehäuses auf eine Größe zu reduzieren, die fast gleich dem von den Turbinenschaufeln (12) definierten Durchmesser ist.

5. Vorrichtung nach Anspruch 1, **gekennzeichnet durch** eine Dichtung (34) auf einem im Wesentlichen kreisförmigen Element (28) in der horizontalen Ebene auf der Tragsäule, die einen größeren Umfang hat als die Tragsäule, wobei das Element zwischen der Turbine (10) und den Drehelementen (36) angeordnet ist, und wobei die Dichtung entlang des größten Umfangs des kreisförmigen Elements (28) angeordnet ist.

6. Vorrichtung nach den Ansprüchen 1 und 5, **dadurch gekennzeichnet, dass** die Dichtung (34) zum Halten der Tragsäule in der gewünschten Position selektiv mit einem umgebenden Teil der Innenwand (31) des Turbinengehäuses in Kontakt gebracht werden kann, um zu verhindern, dass Wasser in den Raum über dem kreisförmigen Element (28) eintritt, und um zu verhindern, dass Vibrationen von der Turbine zu dem Turbinengehäuse (30) wandern, wenn die Turbine in Betrieb ist.

7. Vorrichtung nach Anspruch 1, **dadurch gekennzeichnet, dass** mindestens ein Teil der Tragsäule (22) in Form von Leitschaufeln ausgebildet ist, um zu bewirken, dass dem Wasserstrom während des Betriebs eine Drehrichtung gegeben wird, die der Drehrichtung entgegengesetzt ist, die dem Wasserstrom beim Vorbeifließen an den Turbinenschaufeln (12) gegeben wird.

8. Vorrichtung nach Anspruch 1, **dadurch gekennzeichnet, dass** durch einen inneren Durchgang in der Tragsäule (22) für einen Energietransfer zwischen der Turbine (10) und einem Generator (38) gesorgt wird, und dass sich der Generator auf einer Ebene über dem kreisförmigen Element (28) befindet, vorzugsweise über dem Turbinengehäuse (30).

9. Vorrichtung nach Anspruch 1, **dadurch gekennzeichnet, dass** das Turbinengehäuse (30) ein Fertigteil ist, das an den Ort, an dem Energie erzeugt werden soll, gebracht und auf dem Meeresboden installiert werden kann, so dass sich dann ein oberes Teil des Turbinengehäuses auf einer Ebene befindet, die über dem registrierten normalen Wasserspiegel liegt.

## Revendications

1. Appareil générateur d'énergie alimenté par les courants de marée, comprenant une turbine (10) disposée dans un logement de turbine (30) pour tourner à l'intérieur de celui-ci sur un axe sensiblement vertical, **caractérisé en ce que** la turbine (10) est reliée à une colonne de support (22) qui est supportée (24) de manière pivotante au niveau d'une partie inférieure dans la partie inférieure du logement de turbine, et qui, dans une partie supérieure dans le plan horizontal, est supportée par une pluralité d'éléments rotatifs (36) en prise avec une partie de la paroi interne du logement de turbine, moyennant quoi ladite turbine peut être mise en rotation de manière sélective dans ledit logement de turbine de sorte que la turbine soit à tout moment positionnée de manière optimale par rapport à la direction dominante de l'écoulement d'eau.

2. Appareil selon la revendication 1, **caractérisé en ce que** lesdits éléments rotatifs (36) peuvent être actionnés et ainsi entraîner ladite rotation sélective de la turbine.

3. Appareil selon la revendication 2, **caractérisé en ce que** les éléments rotatifs sont des roues actionnées de manière hydraulique ou électrique.

4. Appareil selon la revendication 1, **caractérisé par** un élément (28) sur la colonne de support entre la turbine (10) et les éléments rotatifs (36), cette partie diminuant progressivement dans la direction de ladite turbine de manière à réduire l'ouverture d'écoulement (32) du logement de turbine à une taille quasiment égale au diamètre défini par les pales de turbine (12).

5. Appareil selon la revendication 1, **caractérisé par** un dispositif d'étanchéité (34) sur un élément sensiblement circulaire (28) dans le plan horizontal sur la colonne de support ayant une circonférence supérieure à la colonne de support, dans lequel ledit élément est disposé entre la turbine (10) et les éléments rotatifs (36), ledit dispositif d'étanchéité étant disposé le long de la périphérie la plus importante de l'élément circulaire (28).

6. Appareil selon les revendications 1 et 5, **caractérisé en ce que** ledit dispositif d'étanchéité (34) peut être mis en contact de manière sélective avec une partie environnante de la paroi intérieure (31) du logement de turbine, de manière à maintenir ladite colonne de support dans la position souhaitée, afin d'empêcher l'eau d'entrer dans l'espace au-dessus dudit élément circulaire (28) et d'empêcher des vibrations provenant de la turbine, lorsque celle-ci est en fonctionnement, de se déplacer vers le logement de turbine (30).

7. Appareil selon la revendication 1, **caractérisé en ce qu'**au moins une partie de ladite colonne de support (22) est réalisée sous la forme d'aubes de guidage, afin de permettre à l'écoulement d'eau pendant le fonctionnement de prendre une direction de rotation opposée à la direction de rotation que l'écoulement d'eau prend au passage des pales de turbine (12).

8. Appareil selon la revendication 1, **caractérisé en ce qu'**un transfert d'énergie entre la turbine (10) et un générateur (38) est prévu à travers un passage interne dans ladite colonne de support (22), et **en ce que** ledit générateur est situé à un niveau au-dessus dudit élément circulaire (28), de préférence au-dessus dudit logement de turbine (30).

9. Appareil selon la revendication 1, **caractérisé en ce que** ledit logement de turbine (30) est un élément préfabriqué qui peut flotter jusqu'à l'emplacement où l'énergie doit être générée, et est installé sur le fond marin de sorte qu'une partie supérieure du logement de turbine se trouve à un niveau supérieur au niveau normal de l'eau enregistré.
